Europäisches Patentamt

European Patent Office

Office européen des brevets

(11) Publication number: **0 379 266 B1**

# EUROPEAN PATENT SPECIFICATION

(45) Date of publication of patent specification: **17.08.94**   (51) Int. Cl.⁵: **C04B 11/05**, C04B 11/02

(21) Application number: **90250009.9**

(22) Date of filing: **09.01.90**

(54) **Production method for anhydrous gypsum.**

(30) Priority: **17.01.89 JP 8339/89**

(43) Date of publication of application:
**25.07.90 Bulletin 90/30**

(45) Publication of the grant of the patent:
**17.08.94 Bulletin 94/33**

(84) Designated Contracting States:
**DE DK GB IT**

(56) References cited:
**DE-A- 2 613 651**

**WORLD PATENTS INDEX Accession No 77-49497Y, Week 28 DERWENT PUBLICA-TIONS LTD & JP-A-52065795 (MITSUBISHI HEAVY IND) 31-05-77**

**WORLD PATENTS INDEX Accession No 77-49498Y, Week 28 DERWENT PUBLICA-TIONS LTD & JP-A-52065796 (MITSUBISHI HEAVY IND) 31-05-77**

**CHEMICAL ABSTRACTS, vol. 93, no. 8, Columbus, Ohio && JP-A-55027860 (SUMITOMO METAL MINING CO. LTD) 28-02-1980 ref. no. 78399B**

(73) Proprietor: **MITSUBISHI JUKOGYO KABUSHIKI KAISHA**
**5-1, Marunouchi 2-chome**
**Chiyoda-ku**
**Tokyo (JP)**

(72) Inventor: **Igawa, Mitsushi**
**c/o Ryomei Giken K.K., 6-22, Kanonshin-machi 4-cho**
**Nishi-ku, Hiroshima, Hiroshima Pref. (JP)**
Inventor: **Shinoda, Naoharu, Hiroshima Techn. Inst.Mitsubishi**
**Jukogyo K.K., 6-22, Kanonshin-machi 4-chome**
**Nishi-ku, Hiroshima, Hiroshima Pref. (JP)**
Inventor: **Atsushi, Tatani, Hiroshima Techn. Inst.Mitsubishi**
**Jukogyo K.K., 6-22, Kanonshin-machi 4-chome**
**Nishi-ku, Hiroshima, Hiroshima Pref. (JP)**
Inventor: **Tsutsui, Kouyo**
**c/o Mitsubishi Jukogyo K.K, 5-1 Marunouchi 2-chome**
**Chiyoda-ku (JP)**
Inventor: **Taketoshi, Okuro**
**c/o Mitsubishi Jukogyo K.K, 5-1 Marunouchi 2-chome**
**Chiyoda-ku (JP)**

WORLD PATENTS INDEX LATEST Accession No 87-075403, Week 11 DERWENT PUBLICATIONS LTD & JP-A-62027358 (MITSUBISHI HEAVY IND) 05-02-87

CHEMICAL ABSTRACTS, vol. 110, no. 22, 29 May 1989 Columbus, Ohio, USA & JP-A-63274614 (MITSUBISHI HEAVY INDUSTRIES) 11-11-1988 ref. no. 195797K

(74) Representative: **Meissner, Peter E., Dipl.-Ing. et al**
**Meissner & Meissner,**
**Patentanwaltsbüro,**
**Postfach 33 01 30**
**D-14171 Berlin (DE)**

**Description**

The present invention relates to a method for producing anhydrous gypsum, which gypsum is used as an ingredient for anhydrous gypsum plaster, Keen's cement, estrich gyps (estrich gypsum), and the like, or used as a filler for various casts.

The following production methods of anhydrous gypsum have conventionally been known:

(1) A method of producing anhydrous gypsum by heating and baking, at a temperature between 300 and 900°C, natural gypsum or desulfurization gypsum dihydrate which is a by-product from a lime-gypsum process exhaust gas desulfurizing apparatus and may contain a few percents of impurities (gypsum dihydrate is also called calcium sulfate dihydrate and has a formula of $CaSO_4 \cdot 2H_2O$); and

(2) A method of producing anhydrous gypsum by adding water to the above ingredient to make a slurry and by heating and pressurizing the slurry to recrystallize anhydrous gypsum.

As a concrete example of the above method (1) that can be used in a laboratory, a method is known in which the above ingredient is placed on an iron plate and heated to about 300 to 900°C in an electric furnace or directly over flame. On an industrial scale, burning facilities, such as a flat furnace and rotary kiln, can be used to continuously obtain large amounts of anhydrous gypsum at about 300 to 900°C with the heat of combustion of fuel oil, kerosene, natural gas or the like.

Also, as a concrete example of method (2) above, a method is known in which a slurry of a 10 to 20 wt% concentration produced by adding water to the above ingredient is placed in a pressure kiln to heat and pressurize at around 230°C so that crystal water is separated from the ingredient and anhydrous gypsum is deposited in the process of gypsum being dissolved in water. This method, however, has not been put into practice on an industrial scale.

There are several problems associated with the above two methods, (1) and (2). As for method (1), because the temperature of burning is high, additional costs for heat resistant materials are necessary. Furthermore, because it is a method of burning in entrained air, additional facilities against dust, such as cyclones and bag filters, are necessary. As for method (2), a centrifuge is required to dehydrate the gypsum obtained in slurry state. Also, the product that has been dehydrated in this way has to be completely dehydrated with another drying apparatus.

The present invention has been made to solve the above problems. An object of this invention is to provide a method of producing anhydrous gypsum in a lower temperature range by using a powder of desulfurization gypsum dihydrate or natural gypsum and by using sodium citrate as habit modifier. That is, the gist of the present invention resides in a method for producing anhydrous gypsum in which 0.05 to 1.5 weight parts of sodium citrate is added to 99.95 to 98.5 weight parts of desulfurization gypsum dihydrate or natural gypsum powder, and the mixture is heated in steam atmosphere at 125 to 150°C.

According to the present invention, because desulfurization gypsum dihydrate or natural gypsum is heated in steam atmosphere, the crystal water coming out of these gypsums does not go away as gas. Without any addition of water, therefore, these gypsums dissolve, and recrystallized anhydrous gypsum can be obtained.

BRIEF DESCRIPTION OF THE DRAWINGS

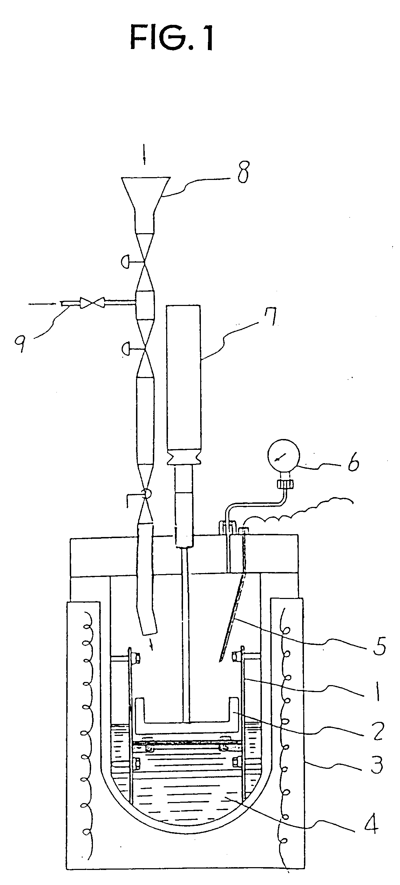

FIG. 1 shows a partial section of a production apparatus of anhydrous gypsum which can be used to carry out an example of the method of the present invention.

With reference to the attached drawing, the present invention will be explained below.

In FIG. 1, numeral 1 indicate a reactor (autoclave), 2 a stirring blade, 3 an electric furnace, 4 heated water, 5 a thermocouple, 6 a pressure gauge, 7 electromagnetic stirrer, 8 a supply inlet for ingredient gypsum, and 9 a supply inlet of $N_2$ gas for sending ingredients by pressure.

This production apparatus has a reactor 1 which has a pressurization mechanism (not shown) in its electric furnace 3. Furthermore, the electric furnace 3 has an electromagnetic stirrer 7 for driving a stirring blade 2. At the top portion of the electric furnace, there is a supply inlet 8 for ingredient gypsum, and this inlet 8 has a supply inlet 9 for $N_2$ gas for sending ingredients by pressure.

An ingredient mixture is sent by pressure into the reactor 1 through the supply inlet 8 for ingredient gypsum. Here, the ingredient mixture is, for example, desulfurization gypsum dihydrate mixed with sodium citrate. The supplied ingredient is stirred by the stirring blade 2 in the reactor 1. While stirring the ingredient, pressure is adjusted with a pressure gauge 6 of the above-mentioned pressurization mechanism, and temperature is adjusted with a thermocouple 5 in the electric furnace in order to promote reaction. Also, heated water 4 keeps the steam atmosphere in the reactor.

It should be noted that the present invention is not restricted to the apparatus described above. Any addition, modification, or variation of the above apparatus within the technical scope of the present invention should be considered to be included in the present invention.

Now, the principle of the production method of the present invention will be explained in detail.

In general, when gypsum dihydrate is mixed with water and pressurized and heated, it dissolves into an aqueous solution, and at around 110°C it becomes hemihydrate gypsum losing three quarters of its crystal water ($3/2H_2O$). At around 230°C, it further loses the remaining quarter of crystal water ($1/2H_2O$) to become recrystallized anhydrous gypsum. The crystal water lost in this process is the kind of water that could be used to dissolve hemihydrate gypsum in the same way as added water unless it separates and goes away as gas from the gypsum into the gas phase.

A first feature of the present invention is that the heating process is carried out in steam atmosphere. In this atmosphere, the crystal water separating from desulfurization gypsum dihydrate or natural gypsum does not go away as gas and dissolves the gypsum, and recrystallized anhydrous gypsum can be obtained.

A second feature of the present invention is as follows: as an example of using a habit modifier in methods of pressurizing and heating gypsum dihydrate in an aqueous solution as described above, a method for producing α-hemihydrate gypsum is known. A habit modifier controls the dissolution of gypsum dihydrate and also the growth of crystal in one particular direction so that uniformly grown hemihydrate gypsum can be obtained when dissolved gypsum dihydrate recrystallizes as hemihydrate gypsum and grows. As this habit modifier, sodium succinate or sodium citrate or the like can be used.

Using these habit modifiers, desulfurization gypsum dihydrate and natural gypsum were heated at 120 to 150°C under the condition of the first feature above of the present invention. While hemihydrate gypsum was obtained using sodium succinate, anhydrous gypsum was obtained using sodium citrate. It is well known that anhydrous gypsum is more stable than hemihydrate gypsum. Sodium citrate is more effective as habit modifier than sodium succinate. Therefore, by the use of sodium citrate, which is the above second feature of the present invention, the dissolution of gypsum dihydrate can be controlled very well, and the crystal growth of hemihydrate gypsum is also controlled quite well. Therefore, while other reactions are restrained, hemihydrate gypsum can be converted to more stable anhydrous gypsum. From the fact that the above described method succeeded in producing anhydrous gypsum, the inventors have found a production method of anhydrous gypsum in which high temperatures and measures against fine dust particles are not required, and in which a centrifuge is not required because no excess water is used. Also, according to the present invention, separated crystal water can be sufficiently removed by slightly heating at the outlet of the reactor.

Next, concrete examples will be described.

Example 1

20g of sodium citrate was added to 1600g of desulfurization gypsum dihydrate to prepare an ingredient mixture (98.8 weight parts of desulfurization gypsum dihydrate and 1.2 weight parts of sodium citrate). The mixture was continuously fed into an autoclave at a rate of 560 g/hr. The temperature and pressure inside the autoclave were maintained at 136°C and 3.2 kg/cm², respectively, while stirring. After reaction, the steam in the autoclave was released, and water was removed to obtain anhydrous gypsum. The reaction time in the course of the above procedure was approximately 2.8 hours.

Example 2

With 1110g of desulfurization gypsum dihydrate, 0.72g of sodium citrate (99.94 weight parts of desulfurization gypsum dihydrate and 0.06 weight parts of sodium citrate), 82 g/hr for the rate of supplying the ingredient, 150°C for the temperature in the autoclave, 4.2 kg/cm² for the pressure, and 2.3 hours for the reaction time, anhydrous gypsum was obtained. The other operation was the same as in Example 1.

Example 3

With 1800g of desulfurization gypsum dihydrate, 28g of sodium citrate (98.5 weight parts of desulfurization gypsum dihydrate and 1.5 weight parts of sodium citrate), 276 g/hr for the rate of supplying the ingredient, 125°C for the temperature in the autoclave, 3.1 kg/cm² for the pressure, and 6.6 hours for the reaction time, anhydrous gypsum was obtained. The other operation was the same as in Example 1.

Example 4

With 960g of desulfurization gypsum dihydrate, 3.8g of sodium citrate (99.6 weight parts of desulfurization gypsum dihydrate and 0.4 weight parts of sodium citrate), 241 g/hr for the rate of supplying the ingredient, 130°C for the temperature in the autoclave, 3.0 kg/cm$^2$ for the pressure, and 4.0 hours for the reaction time, anhydrous gypsum was obtained. The other operation was the same as in Example 1.

Example 5

With 880g of desulfurization gypsum dihydrate, 0.7g of sodium citrate (99.92 weight parts of desulfurization gypsum dihydrate and 0.08 weight parts of sodium citrate), 275 g/hr for the rate of supplying the ingredient, 141°C for the temperature in the autoclave, 3.5 kg/cm$^2$ for the pressure, and 3.2 hours for the reaction time, anhydrous gypsum was obtained. The other operation was the same as in Example 1.

The results of the above examples are shown in Tables 1 and 2.

Comparative Example 1

292g of water and 0.77g of sodium citrate were added to 770g of desulfurization gypsum dihydrate (72.45 weight parts of desulfurization gypsum dihydrate, 27.48 weight parts of water, and 0.07 weight parts of sodium citrate) to prepare an ingredient mixture. This mixture was continuously supplied to an autoclave at a rate of 357 g/hr. The temperature inside the autoclave was 143°C, and the pressure was 3.9 kg/cm$^2$. Anhydrous gypsum was obtained with a reaction time of 3.0 hr. The other operation was the same as in Example 1.

Comparative Example 2

0.5g of sodium succinate was added to 720g of desulfurization gypsum dihydrate (99.93 weight parts of desulfurization gypsum dihydrate, and 0.07 weight parts of sodium succinate) to prepare an ingredient mixture. This mixture was continuously supplied to an autoclave at a rate of 276 g/hr. The temperature inside the autoclave was 136°C, and the pressure was 3.4 kg/cm$^2$. With a reaction time of 2.6 hr, anhydrous gypsum was not obtained, and hemihydrate gypsum was obtained instead. The other operation was the same as in Example 1.

The results of these Comparative Examples are shown in Tables 1 and 2 along with the results of Examples 1 through 5.

The N value shown in Table 2 indicates the amount of crystal water remaining in the product and can be obtained by the following equation:

$$N \text{ value} = (w_1 - w_2)/\{(w_2/136)x18\},$$

where $w_1$ is the weight of the product: between 1.2 and 1.5g of the product was sampled and weighed; and $w_2$ is the weight of the sampled product which remained after crystal water was completely removed by drying at 260°C for 3 hours in a dryer. Therefore, $(w_1 - w_2)$ is the weight of crystal water which separated from crystal. Also, 136 is the molecular weight of $CaSO_4$, and 18 is that of water.

Thus, if desulfurization gypsum dihydrate remains all unreacted, the N value would be 2.0. If it becomes hemihydrate gypsum, the N value would be 0.5, and if it all becomes anhydrous gypsum completely, the N value would be zero.

Table 1: Conditions of Examples and Comparative Examples

| | Desulfurization gypsum dihydrate (weight parts) | Water (wt.parts) | Habit modifier (wt. parts) | Temp. (°C) | Pressure (kg/cm²) | Reaction Time (hr) |
|---|---|---|---|---|---|---|
| Example 1 | 98.80 | 0 | Na-Ci 1.20 | 136 | 3.2 | 2.8 |
| Example 2 | 99.94 | 0 | Na-Ci 0.06 | 150 | 4.2 | 2.3 |
| Example 3 | 98.50 | 0 | Na-Ci 1.50 | 125 | 3.1 | 6.5 |
| Example 4 | 99.60 | 0 | Na-Ci 0.40 | 130 | 3.0 | 4.0 |
| Example 5 | 99.92 | 0 | Na-Ci 0.08 | 141 | 3.5 | 3.2 |
| Comparative example 1 | 72.45 | 27.48 | Na-Ci 0.07 | 143 | 3.9 | 3.0 |
| Comparative example 2 | 99.93 | 0 | Na-Su 0.07 | 136 | 3.4 | 2.6 |

Note: Na-Ci signifies sodium citrate, and Na-Su signifies sodium succinate.

Table 2: Results of Examples and Comparative Examples

| | Product composition | N value |
|---|---|---|
| Example 1 | Unreacted desulfurization gypsum dihydrate, anhydrous gypsum, and a small amount of hemihydrate gypsum. | 0.256 |
| Example 2 | Same as above | 0.320 |
| Example 3 | Same as above | 0.371 |
| Example 4 | Largely, unreacted desulfurization dihydrate, anhydrous gypsum, and a small amount of hemihydrate gypsum. | 1.402 |
| Example 5 | Unreacted desulfurization gypsum dihydrate, anhydrous gypsum, and a small amount of hemihydrate gypsum. | 0.678 |
| Comparative example 1 | Unreacted desulfurization gypsum dihydrate, anhydrous gypsum, and a small amount of hemihydrate gypsum. | 0.546 |
| Comparative example 2 | Unreacted desulfurization gypsum dihydrate, and hemihydrate gypsum. | 0.610 |

As seen from Table 2, the N value is less than 0.5 in Examples 1 through 3, and if we consider the existence of unreacted gypsum dihydrate almost all of the ingredient became anhydrous gypsum. In Examples 4 and 5 and Comparative Example 1, although the N value is more than 0.5, what was obtained included more anhydrous gypsum than hemihydrate gypsum. Attempts were made to obtain a hardened product by kneading the products of Examples 1 through 5 and Comparative Example 1 together with water, but they did not harden. This is a manifestation of the fact that anhydrous gypsum does not hydrate and harden and is a reason that it is called dead gypsum (or dead-burnt gypsum). The product of Comparative Example 2 did hydrate and readily harden. This is a characteristic of hemihydrate gypsum.

As explained by the above examples, anhydrous gypsum can be obtained by mixing 99.95 to 98.5 weight parts of desulfurization gypsum dihydrate and 0.05 to 1.5 weight parts of sodium citrate to obtain an ingredient mixture, and by heating the mixture in steam atmosphere at 125 to 150°C. In this case, it has been found that even if water is attached to the surface of the above ingredient gypsum it does not cause any problems. Also, it is inferred that, if the reacting materials stay in the reactor for longer periods of time than the reaction times used in Examples 1 through 5, 100% of ingredient gypsum can be converted to anhydrous gypsum.

**Claims**

1. A method for producing anhydrous gypsum which is characterized in that 0.05 to 1.5 weight parts of sodium citrate is added to 99.95 to 98.5 weight parts of a powder of desulfurization dihydrate gypsum or natural gypsum, and they are heated in a steam atmosphere at 125 to 150°C.

2. A method as claimed in Claim 1, wherein reacting materials stay in a reactor for a period of time long enough to make the N value which is defined by the equation below equal to or less than 0.5:

N value $= (w_1 - w_2)/\{(w_2/136) \times 18\}$,

where $w_1$ is the weight of a product: between 1.2 and 1.5g of the product is sampled and weighed; $w_2$ is the weight of the sampled product which remains after crystal water is completely removed by drying at 260°C for 3 hours in a dryer.

**Patentansprüche**

1. Verfahren zur Herstellung von wasserfreiem Gips, bei dem 0,05 bis 1,5 Gewichtsteile Natriumcitrat zu 99,95 bis 98,5 Gewichtsteile eines Pulvers aus desulfuriertem Dihydratgips oder Naturgips hinzugegeben und in Dampfatmosphäre auf 125 bis 150°C erhitzt werden.

2. Verfahren nach Anspruch 1, dadurch gekennzeichnet, daß die Reaktionsmaterialien lange genug in dem Reaktionsgefaß bleiben, um einen in der nachstehenden Gleichung definierten N-Wert von gleich oder weniger als 0,5 zu erhalten.

N-Wert $= (w_1 - w_2)/\{(w_2/136) \times 18\}$,

worin $w_1$ das Gewicht eines Produkts ist - zwischen 1,2 und 1,5 g des Produkts wurden als Probe entnommen und gewogen - und $w_2$ das Gewicht des entnommenen Produkts ist, das zurückbleibt, nachdem das Kristallwasser vollständig durch 3-stündiges Trocknen bei 260°C in einem Trockner entzogen wurde.

**Revendications**

1. Procédé pour produire du gypse anhydre qui est caractérisé en ce que 0,05 à 1,5 partie en poids de citrate de sodium est ajoutée à 99,95 à 98,5 parties en poids d'une poudre de gypse naturel ou de gypse dihydraté de désulfurisation, et ils sont chauffés dans une atmosphère de vapeur de 125 à 150°C.

2. Procédé selon la revendication 1, dans lequel des matières de réaction restent dans un réacteur pendant une période de temps assez longue pour rendre la valeur N, qui est définie par l'équation ci-dessous, égale ou inférieure à 0,5 :

Valeur de N $= (w1 - w2)/\{(w2/136) \times 18\}$,

dans laquelle w1 est le poids d'un produit : entre 1,2 et 1,5 g du produit est prélevé et pesé ; w2 est le poids du produit prélevé qui reste après que l'eau de cristallisation a été complètement éliminée par séchage à 260°C pendant trois heures dans un séchoir.

# FIG. 1